(19)

Europäisches
Patentamt

European
Patent Office

Office européen
des brevets

(11)     **EP 3 102 383 B1**

(12)     **EUROPEAN PATENT SPECIFICATION**

(45) Date of publication and mention
of the grant of the patent:
**04.04.2018 Bulletin 2018/14**

(51) Int Cl.:
*B29C 49/56* (2006.01)     *B29C 49/48* (2006.01)
*B29C 49/06* (2006.01)     *B29C 49/36* (2006.01)

(21) Application number: **15708277.7**

(22) Date of filing: **21.01.2015**

(86) International application number:
**PCT/IB2015/050467**

(87) International publication number:
**WO 2015/110970 (30.07.2015 Gazette 2015/30)**

(54) **BLOWING MOLD FOR BLOWING THERMOPLSTIC MATERIAL CONTAINERS.**

BLASFORM ZUM BLASEN VON BEHÄLTERN AUS THERMOPLASTISCHEM MATERIAL

MOULE DE SOUFFLAGE POUR LE SOUFFLAGE DE RÉCIPIENTS EN MATÉRIAU THERMOPLASTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.01.2014 IT RM20140032**

(43) Date of publication of application:
**14.12.2016 Bulletin 2016/50**

(73) Proprietor: **S.I.P.A. Società Industrializzazione Progettazione
e Automazione S.p.A.
31029 Vittorio Veneto (IT)**

(72) Inventors:
• **ZOPPAS, Matteo
I-31015 Conegliano (IT)**
• **CAVALLINI, Franco
I-31100 Treviso (IT)**
• **TESTA, Marco
I-33170 Pordenone (IT)**

(74) Representative: **Celona, Antonio et al
Notarbartolo & Gervasi S.p.A.
Corso di Porta Vittoria, 9
20122 Milano (IT)**

(56) References cited:
**EP-A1- 2 311 625     EP-A2- 2 135 726
US-A1- 2006 093 699     US-A1- 2010 203 185
US-A1- 2012 251 653**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the invention

The present invention relates to a device for opening and closing a mold for blowing thermoplastic material containers, such as for example PET bottles, on a rotary blow molding machine.

### Background art

The blowing or stretch blowing molds used for producing containers from a preform made of thermoplastic material that is preheated generally consist of three parts, for the particular shape that nowadays containers have at their base, which is generally concave. Therefore, generally, molds are made consisting of two lateral half molds which shape the body of the container and of a mold bottom to shape the container bottom. Therefore, the lower areas of the two half molds and the upper part of the mold bottom are provided with fixing means, of complementary shape, reciprocally insertable into each other when the mold is in the closed position, to ensure the axial rigidity of the mold in closed position in the presence of the blowing pressure, which generally reaches 40 bar when molding PET containers.

The two lateral half molds are configured to move relative to each other between an open position and a closed position, under the action of electrically controlled actuating means or via cams. The same actuator means are also arranged to control the cyclic opening and closing of the mold bottom. Solutions are particularly widespread which provide for the opening and closing of the two half molds and of the mold bottom by means of cams.

Usually, the maximum angle $\alpha$max that is to be formed upon reaching the maximum opening of the two lateral half molds is closely related to the maximum size of the cross section of the containers to be extracted from the two half molds after molding. This therefore has an influence on the mechanism and on the geometry of the cam profile.

It is known that, in the case of container molding devices, the maximum productivity is measured in containers/h/cavity and is expressed as a function of cycle time, and said cycle time is made up of a step dedicated to the insertion of a preform into the mold and to the closing and constraint movement of the mold, and of a step dedicated to the blow molding process, and thus the cycle time also includes a step dedicated to the release, i.e. the opening of the half molds and the extraction of the finished container from the blowing mold.

In designing the blow molding machines of thermoplastic containers, the maximum size of the containers that can be produced in such machines and the maximum forces that are applied on the various parts of the machine, and in particular the reactions that are transmitted to the cams by the action of the actuator means during the operations, are normally defined.

If also small containers are to be made on blow molding machines which are designed to make larger containers, an opening angle $\alpha$1 smaller than $\alpha$max would be sufficient for the extraction of the container from the mold but since the mold is opened by the maximum design opening angle which is associated with larger bottles, the maximum theoretical productivity reachable by the blow molding machine is reduced due to the longer time required to open and close the half molds by the above angle $\alpha$max. This is a strong limit to the increase of the productivity of blow molding machines.

Solutions have been proposed in order to achieve higher productivity for blow molding machines, for which the molds are designed with smaller values of the maximum opening angle $\alpha$max and therefore able to produce a smaller number of types of containers.

For example, there are molding devices optimized to produce containers up to 0,5 liters max, or up to 2,0 liters max, etc. However in these cases, the blow molding machines put the achievement of high productivity first, but on the other hand they lose flexibility in the production capacity of containers of different sizes. In fact, it is not possible on the same device to produce containers having dimensions exceeding the limits imposed by the spaces available for the extraction of the same. In blow molding machines of this type, in order to change the opening angle $\alpha$max between the two half molds, it is necessary to intervene on the mechanism members, for example by changing the size of some elements of the transmission, for example the connecting rods. However, this operation is complicated because it requires a long time both for installation and for the subsequent adjustments of the mechanical members and it is disadvantageous because it consequently forces an interruption of production.

An example of systems for the control and the cyclic closing of the mold for PET bottles which aims to improve the productivity of a blow molding machine is described in document EP 2135726 B1, which provides for the two lateral half molds to open and close in a manner not equal with respect to the plane of vertical symmetry of the mold. In particular, the half mold that is in retracted position, considering the direction of motion of the blow molding machine, has an opening speed that reaches its maximum value in a step prior to the step in which the mold that is ahead reaches its maximum value. Therefore, the two maximum opening angles $\alpha$ and $\beta$, which reach the two half molds when they are fully open, are of equal value but the moments in which the half molds reach these maximum angles $\alpha$ and $\beta$ are consecutive, i.e. not coincident.

Another example of a control system for opening and closing a blowing mold in a rotary blow molding machine is disclosed in document US7871259B2. In order to improve the opening and closing kinematics of the half molds and reduce the distance that separates adjacent blowing molds, this document proposes a configuration of the control system for opening and closing a blowing mold with the plane of separation of the half molds directed obliquely, in the direction of advance of the blow molding machine, by a selected angle in relation to the radial direction of the blow molding machine, and with one of the two half molds rigidly connected to the blowing wheel (not movable). A drawback of this solution is that it can pose problems of extraction of the bottle from the mold, because the bottle can remain adherent to the non-movable half mold during the extraction step by the gripping members.

Therefore, the need is felt to provide a device for opening and closing the mold which offers greater flexibility in the change of the formats of the containers to be blown on the same blow molding machine.

## Summary of the invention

A primary object of the present invention is to provide a mold that has a control device for opening and closing the mold itself, which allows making a wider range of formats of containers blown and that it is therefore more flexible in its production capability.

This object is achieved by a blowing mold for blowing a thermoplastic material container which, according to claim 1, comprises two half molds with a cyclic opening and closing device which moves the two half molds close to and away from each other with an opening angle which ranges from 0 in the closed position of the half molds to an $\alpha$max value in a position of maximum opening of the half molds, a drum cam comprising a first cam track, a first cam follower and levers for transmitting the opening and closing motion of the two half molds imparted by the movement of the first cam follower, wherein the first cam follower following the first cam track is adapted to produce a first cyclic opening and closing movement of the two half molds with a first maximum opening angle $\alpha 1$, characterized in that the drum cam comprises a second cam track which can be followed by the first cam follower alternatively to the first cam track to produce a second cyclic opening and closing movement of the two half molds which reaches a second maximum opening angle $\alpha 2$ greater than the first maximum opening angle $\alpha 1$.

Thanks to the solution of the invention, the opening angle of the two lateral half molds can be made to vary according to the production needs, depending on the size of the container to be blown. For example, in a preferred configuration, $\alpha$ being the opening angle which is formed between the two lateral half molds, its maximum value $\alpha$max can take two different amplitudes $\alpha 1$ and $\alpha 2$ as desired, with $\alpha 2$ greater than $\alpha 1$.

In this way, a smaller maximum opening angle $\alpha 1$ must be reached between the two lateral half molds to make a production of small containers, and this results in an increase in productivity and a decrease in the machine cycle time for the blow molding machine. On the other hand, a maximum opening angle $\alpha 2$ greater than $\alpha 1$ is used between the two lateral half molds to make a production of containers with a larger size of the cross section.

By suitably selecting the two cam tracks of the drum cam, possibly associated with the disc cam when there is also a mold bottom, it is ensured that the mold of the invention has a greater production flexibility of containers formats with a reduction in the cycle time, in case containers of reduced size have to be made. Given the high hourly productivity per cavity which has been achieved by blow molding machines, the increase of the same obtainable with the invention is considerable. The dependent claims describe preferred embodiments of the invention.

## Brief description of the figures

Further features and advantages of the invention will appear more clearly from the detailed description of preferred, but not exclusive, embodiments of a blowing mold having an opening and closing device shown by way of a non-limiting example with the aid of the accompanying drawings, in which:

Fig. 1 shows an axonometric view of the mold of the invention in a first embodiment thereof,
Fig. 2 shows an axonometric view of the mold of the invention in a second embodiment thereof,

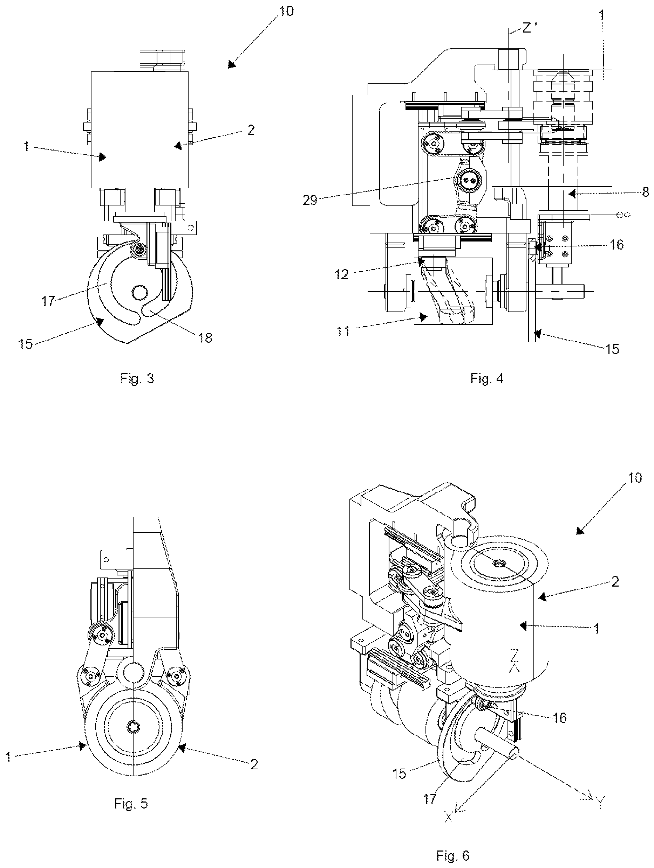

Fig. 3 is a front view of the mold in the closing operating condition,
Fig. 4 shows a lateral view of the mold in Fig. 3,
Fig. 5 shows a plan view of the mold in Fig. 3,
Fig. 6 shows an axonometric view of the mold in Fig. 3,
Fig. 7 and 7a show two axonometric views of an enlarged detail of the mold in Fig. 2,
Fig. 8 and 8a show two axonometric views of a variant of the enlarged detail in Fig. 7,
Figs. 9a, 9b, 9c show views and projections on a plane of the detail in Fig. 7,
Fig. 10 shows a front view of the mold in Fig. 3 in a first maximum opening operating position,
Fig. 11 shows a lateral view of the mold in Fig. 10,
Fig. 12 shows a top view of the mold in Fig. 10,
Fig. 13 shows an axonometric view of the mold in Fig. 10,

Fig. 14 shows a front view of the mold in Fig. 3 in a second maximum opening operating position,
Fig. 15 shows a lateral view of the mold in Fig. 14,
Fig. 16 shows a top view of the mold in Fig. 14,
Fig. 17 shows an axonometric view of the mold in Fig. 14,
Fig. 18 shows a possible plan and axonometric view of a bottle made with a mold of the invention,
Fig. 19 shows a diagram of the cycle time for the production of a thermoplastic container made with a mold of the invention;
Fig. 20 shows a front view of a mold according to the invention in two different working positions a) and b);
Fig. 21 shows a front view of the mold in Fig. 20 in two further different working positions c) and d).

## Detailed description of preferred embodiments of the invention

With reference to the figures, a mold is indicated as a whole with reference numeral 10. It is a mold that is mounted in a manner known by the man skilled in the art on a blow molding machine, generally rotary, which rotates around the vertical axis Z thereof, not shown in the figures. Mold 10 comprises, in known manner, two lateral half molds 1 and 2 and a mold bottom 8 necessary when the container to be blown has a concave base to allow the extraction of the container upon completion of the blowing cycle. The lateral half molds 1 and 2 each consist of a respective external mold holder 3, 4, a shell support 5', 6' and a half shell 5, 6. The use of the half shells allows keeping the same mold holders 3 and 4 to produce containers of different formats and sizes, changing only the half shells.

In a variant of the mold of the invention, it is possible to provide for the shell supports 5', 6' and shells 5, 6 to be made in a single shell block, thus the mold is referred to as monobloc. In this case, the format change takes place by replacing the shell block, keeping the mold holders.

In mold 10, the cyclic opening and closing movement of the two lateral half molds 1 and 2 and of the mold bottom 8 is produced by a mechanism consisting of a first drum cam 11 with cam follower 12 translating in the direction of axis Y, and a connecting rod and crank transmission system 29 oscillating and translating and suitably hinged to each other, in a manner known to the man skilled in the art, for transforming the movement of translation of the cam follower 12, caused by the oscillation of the drum cam 11 about axis Y into a final cyclic folding opening and closing movement of the two lateral half molds 1 and 2 about a hinge with an axis Z' parallel to the axis of rotation of the blow molding machine.

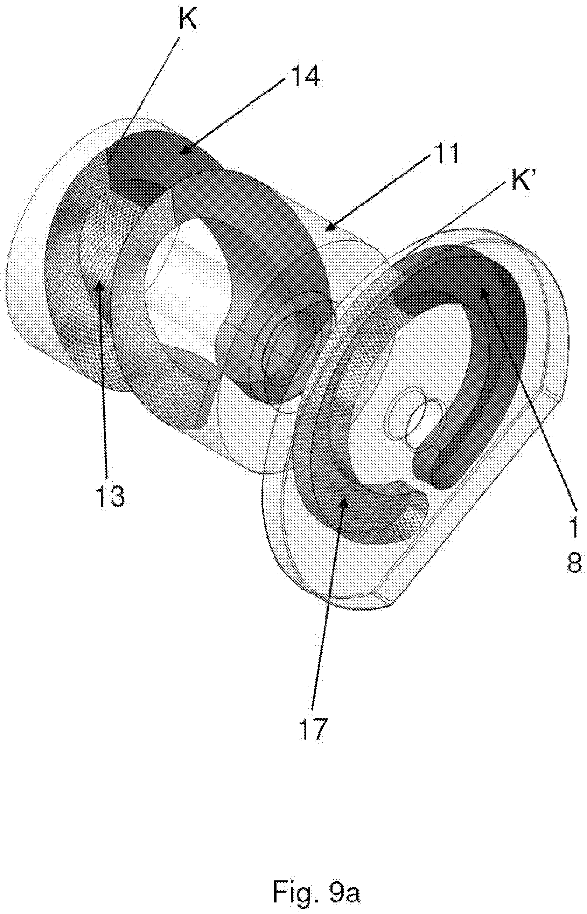

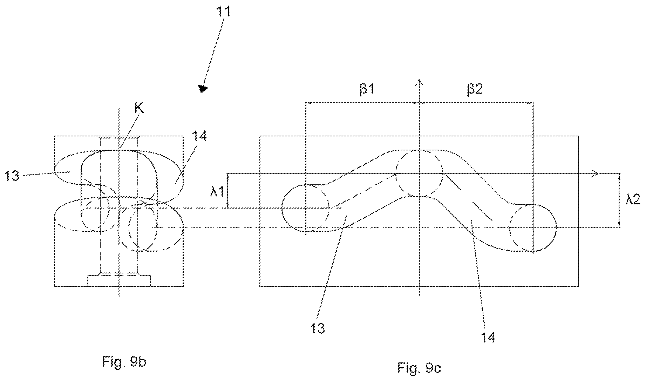

The drum cam 11 preferably comprises two cam tracks 13 and 14 for the cam follower 12, as best shown in figure 9a, where the drum cam is shown in its entirety in axonometric view. Fig. 9b shows a plan view of a detail of the drum cam 11 on the side of point K, which marks the position in which the two half molds 1 and 2 are closed, i.e. in which $\alpha$=0°. The rotation by an angle $\beta$1 of the drum cam 11 about axis Y, in a clockwise direction, produces a translation of the cam follower 12 on track 13 by a stroke $\lambda$1 along axis Y, and consequently, due to the presence of the motion transmission system 29, the translation of the cam follower 12 is transformed into an opening angle $\alpha$1 of the two half molds 1 and 2. By rotating the drum cam 11 in the counterclockwise direction so that the cam follower 12 moves along track 13 in a direction opposite to stroke $\lambda$1, the two half molds 1 and 2 are closed again. This pattern of the cam follower 12 is shown in greater detail with the aid of fig. 9c which shows a projection on a plane of the two cam tracks 13 and 14 of the drum cam 11.

Due to the presence of the second track 14 on the drum cam 11, which starts from point K and extends over the other half circumference in relation to the cam track 13, when the cam follower 12 is in the initial rest position at position K, a rotation by an angle $\beta$2 of the drum cam 11, counterclockwise about axis Y, produces a translation of the cam follower 12 along track 14 by a stroke of length $\lambda$2 and consequently an opening angle $\alpha$2 of the two half molds 1 and 2 is produced, and for the choice of the design dimensions of the various parts forming the drum cam 11, $\alpha$2 is > $\alpha$1.

When mold 10 also consists of a mold bottom 8, required if a container with a concave bottom is molded, the generation of the cyclic translatory movement from top to bottom parallel to direction Z' and vice versa of the mold bottom 8 is achieved through a second cam 15 coupled to the cam follower 16, also translating in direction Z'. The disc cam 15 comprises at least one track for the cam follower 16, and it preferably comprises two tracks 17 and 18 generally but not necessarily of a different shape.

From position "K" corresponding to the two closed half molds 1 and 2, i.e. with the opening angle $\alpha$=0°, the rotation by an angle $\beta$1 of the disc cam 15 about axis Y in a clockwise direction, considering the mold in front view, makes the cam follower 16 follow the cam track 17 and consequently the movement of descent of the mold bottom 8 takes place by a stroke of length 51 concurrent and synchronous with the opening of the two lateral half molds 1 and 2. The ascent movement of the bottom mold 8 for the concurrent closing of the two half molds 1 and 2 takes place by making the cam follower 16 go back along the cam track 17 while the disc cam 15 rotates counterclockwise by angle $\beta$1, bringing the cam follower 16 back to the rest position K, corresponding to the closing of mold 10. This up and down movement takes place for each cycle time.

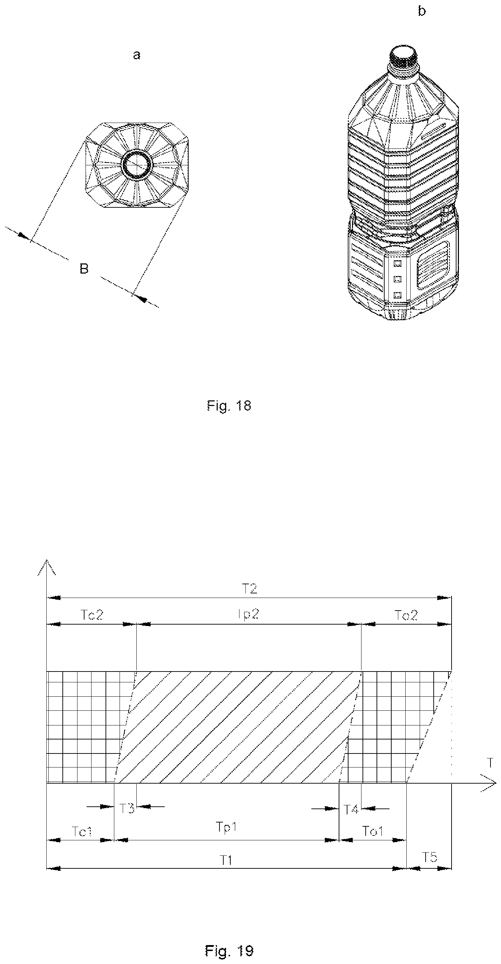

Due to the presence of the second cam track 18 on the disc cam 15, when from position K, where the cam follower 16 is first located in the rest position and the two half molds 1 and 2 are closed with angle $\alpha$=0°, the disc cam 15 is rotated counterclockwise about axis Y by an angle β2, this rotation of cam 15 produces a translation of the cam follower 16 along track 18 by a stroke 52 and consequently the downward movement of the mold bottom 8, with 52>51. Although containers with larger dimensions B (Fig. 18) of the cross section normally correspond to a greater height of the mold bottom, it is clear for the man skilled in the art that this proportion between 51 and 52 can also be different, since it is dependent on the ratio between height and circumference of the container body. It is also possible, without departing from the scope of the invention, that the disc cam 15 is provided with a single cam track which is associated with a drum cam with two different cam tracks.

Also in this case, the ascent movement of the mold bottom 8 is controlled by a rotation of the disc cam 15 in a clockwise direction about axis Y which returns it to the rest position K.

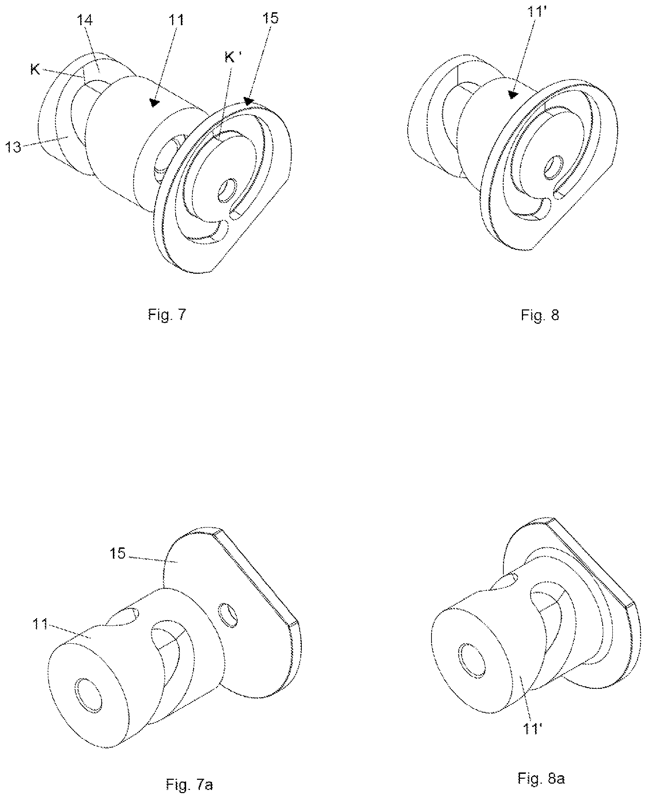

Since the disc cam 15 and the drum cam 11 are integral with each other, by welding the two cams to each other, as shown in figures 7, 7a, each rotation being made about axis Y is also transmitted to the other cam by an angle of equal magnitude. Clearly, as shown by figures 8 and 8a, the two cams can also be made in a single piece 11'.

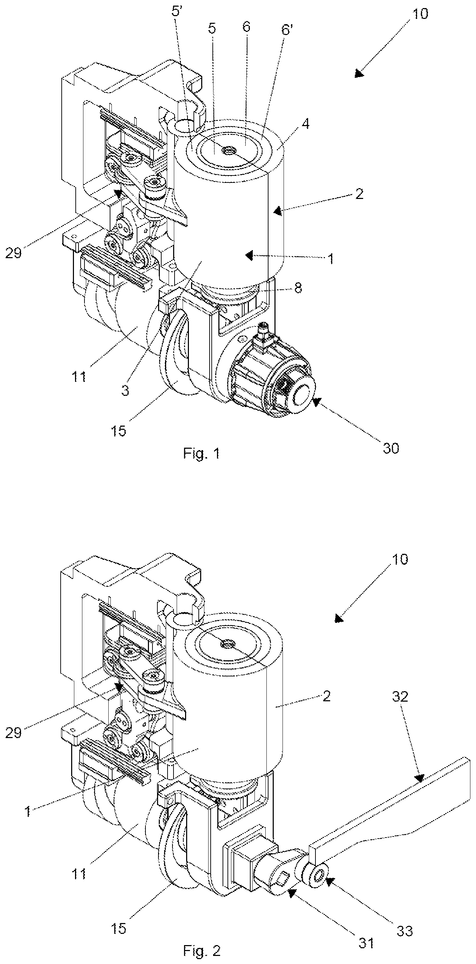

In a first embodiment of the invention shown in particular in figure 1, the cyclic opening motion of mold 10 is transmitted to the drum cam 11 by a servomotor 30. Such a servomotor 30 is also typically defined torque in English. In the variant of the mold of the invention in which the disc cam 15 is provided to move the mold bottom 8, the servomotor 30 also generates the motion of this disc cam 15.

In another variant of embodiment alternative to the above (Fig. 2), the motion to the various parts making up mold 10 can be produced by a mechanical system consisting of at least one cam track 32, a lever 31 and a cam follower 33, integral with lever 31 and which interacts with the cam track 32.

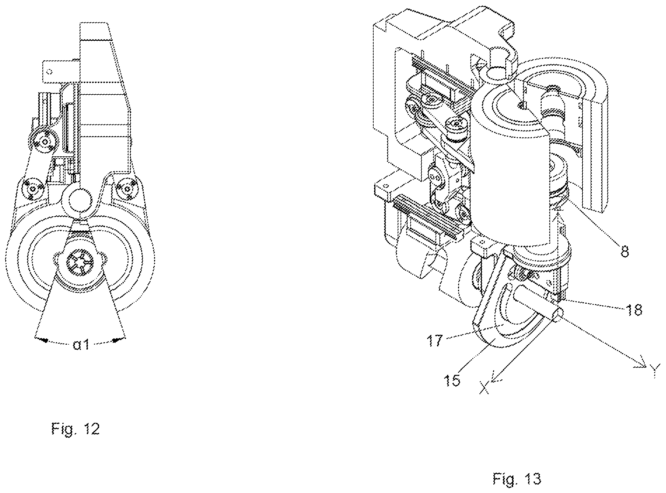

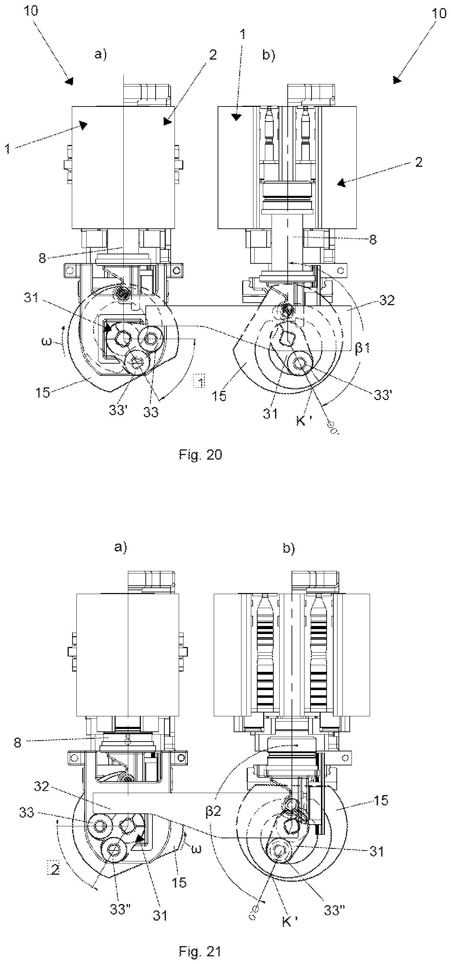

In this case, with particular reference to Fig. 20, which shows a mold on which a shell is mounted for a smaller container format, the rotation of lever 31 by a predetermined angle γ1 in a direction indicated by arrow w and caused by the particular shape of the cam track 32, which occurs by advancing mold 10 from position a) in Fig. 20 to position b) in Fig. 20, causes the movement of the cam follower from the position indicated with 33 to the position indicated with 33 ' in figure 20 and the resulting rotation of the disc cam 15 and of the drum cam 11 by angle β1. With this rotation of the two drum 11 and disc cams 15 there occurs the opening of the mold bottom 8 and the concurrent opening of the two half molds 1 and 2 by angle α1, visible in figure 12.

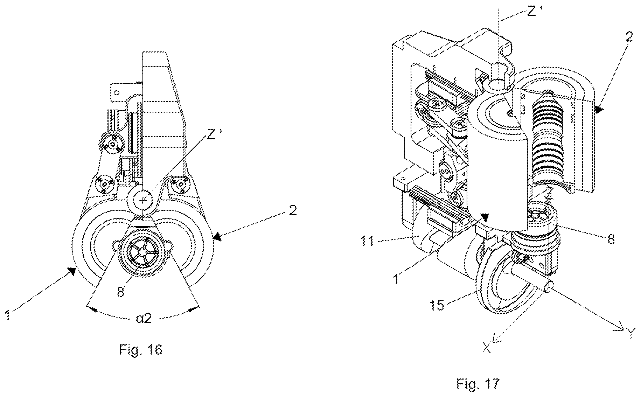

Likewise, if a shell is mounted on the mold for a larger container format, by a specific mounting of lever 31 itself as shown in Fig. 21, in a position that makes the cam follower 33 follow the cam track 32 from another angle, the rotation by a predetermined angle γ2 of the same lever 31, which is done by advancing mold 10 from position a) in Fig. 21 to position b) in Fig. 21, causes the movement of the cam follower from the position indicated with 33 to the position indicated with 33" in figure 21 and the resulting rotation of the disc cam 15 and of the drum cam 11 by angle β2 in the other direction. With this rotation of the two drum 11 and disc cams 15 in the direction of arrow ω' there occurs the opening of the mold bottom 8 and the concurrent opening of the two half molds 1 and 2 by angle α2, visible in figure 16.

As an alternative to this embodiment, a variant embodiment, not shown, can provide for cam 32 to have two different cam tracks that are followed by the same cam follower in the two operating positions defined in the design of the mold to obtain the same result as the embodiment shown above.

Fig. 19 shows a graph of the cycle time advantage that the invention provides to a blow molding machine. As already mentioned above, for container molding devices, the productivity, which is measured in containers/h/cavity, is related to the cycle time T2 according to the expression:

$$\text{Productivity [Containers/h/cavity]} = 3600/\text{Tcycle [s]}.$$

This cycle time is the sum of:

- a time for the first step dedicated to the insertion of a preform in the mold and the closing and constraint of the half molds, indicated with Tc2,
- a time for a second step dedicated to the blow molding process indicated with Tp2,
- a time for a third step dedicated to the release of the mold, the opening of the lateral half molds and the lowering of the mold bottom and the extraction of the finished container from the mold, indicated with To2.

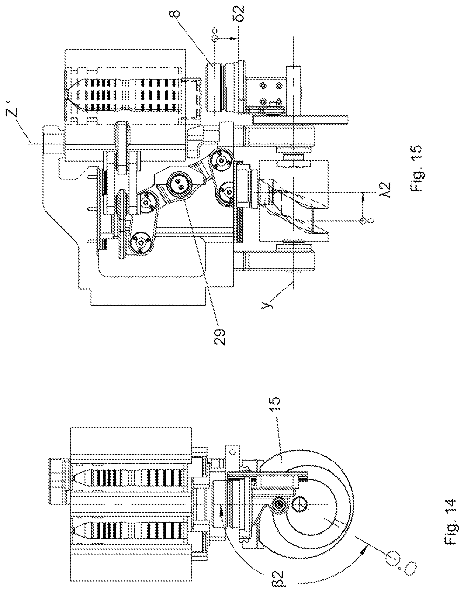

A cycle time for the production of a large container, such as for example the bottle shown in fig. 18, in the graph of figure 19 is represented with the straight line B2. For this case, the maximum opening position of mold 10 is shown in figures 14 to 17.

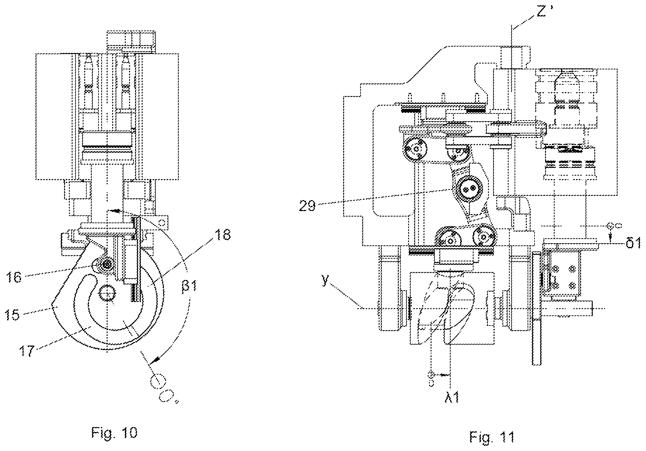

If the mold of the invention is used to produce a smaller container, such as a bottle of a shape similar to that in figure 18 but with smaller volume, and which requires a smaller maximum opening of the lateral half molds, as shown in figures 10 to 13, it should be noted that the total cycle time indicated with T1 and represented by the straight line B1 is less than the cycle time T2. Since the time difference to perform the blowing step Tp1 does not differ much from step Tp2, depending in fact mainly on the type of material used to make the container, the cycle time reduction is accomplished by reducing the opening step time To1, and the closing step time Tc1 that are less than the times of the corresponding To2 and Tc2 by a value T4 and T3, respectively. Thanks to these time gains, there is a reduction in the cycle time of the mold equal to T5 whenever it is used to make containers of sizes smaller than those that are the maximum achievable with the mold itself.

**Claims**

1. A blowing mold (10) for a thermoplastic material container, comprising two half molds (1,2) with a cyclic opening and closing device which moves the two half molds close to and away from each other with an opening angle which ranges from 0° in a closed position of the half molds (1, 2) to an $\alpha$max value in a position of maximum opening of the half molds, a drum cam (11) comprising a first cam track (14), a first cam follower (12) and levers (29) for transmitting the opening and closing motion of the two half molds (1, 2) imparted by the movement of the first cam follower (12), wherein the first cam follower (12) following the first cam track (14) is adapted to produce a first cyclic opening and closing movement of the two half molds with a first maximum opening angle $\alpha$1 so as to allow the extraction of a container of a first diameter determined by the mold,
   **characterized in that** the drum cam (11) comprises a second cam track (13) which can be followed by the first cam follower (12) alternatively to the first cam track (14) to produce a second cyclic opening and closing movement of the two half molds (1, 2) which reaches a second maximum opening angle $\alpha$2 greater than the first maximum opening angle $\alpha$1, so as to allow the extraction from the mold of a container of diameter greater than the first diameter.

2. A mold according to claim 1, comprising a complementary mold bottom (8) of the two half molds able to perform a cyclic opening and closing movement synchronously with the movement of the two half molds.

3. A mold according to claim 2, comprising a disc cam (15) integrally fixed to the drum cam (11) incorporating a third cam track (17) and a fourth cam track (18) to put in motion the mold bottom (8) and a second cam follower (16) adapted to follow the third and fourth (17, 18) cam tracks in two different alternative movements.

4. A mold according to claim 3, wherein the third cam track (17) through the movement of the second cam follower (16) produces a first displacement of the mold bottom (8) of a first predetermined length and wherein the fourth cam track (18) through the movement of the second cam follower (16) produces a second displacement of the mold bottom (8) of length different from the first length.

5. A mold according to claim 3 or 4, wherein the drum cam (11) and the disc cam (15) are able to oscillate together about a common axis perpendicular to the hinge axis of the two half molds (1, 2).

6. A mold according to any one of the preceding claims, wherein the half molds (1, 2) each comprise a mold holder (3, 4) and a half shell (5, 6) or a mold holder (3, 4), a shell support (5', 6') and a half shell (5, 6).

7. A mold according to any one of claims 3 to 6, wherein a third cam follower (33) is provided, adapted to follow a fifth cam track (32) in a first operating cycle to impart a cyclic angular movement to the drum cam (11) and to the disc cam (15) of magnitude $\beta$1.

8. A mold according to claim 7, wherein the third cam follower (33) is fixed to the end of a lever (31) positioned with different angular orientation and is adapted to follow the fifth cam track (32) in a second operating cycle alternative to the first operating cycle to impart an angular cyclic movement to the drum cam (11) and to the disc cam (16) of value $\beta$2.

9. A mold according to the preceding claim, wherein the drum cam (11) and the disc cam (15) can be made in a single piece (11').

10. A rotary blow molding machine comprising a plurality of molds with the features of any one of the preceding claims.

**Patentansprüche**

1.  Blasform (10) für Behälter aus thermoplastischem Material, aufweisend zwei Halbformen (1, 2) mit einer zyklischen Öffnungs- und Schließvorrichtung, die die beiden Halbformen zueinander und voneinander bewegt, wobei der Öffnungswinkel von 0° in der geschlossenen Position der Halbformen (1, 2) bis zu einem Maximalwert $\alpha$max reicht, bei dem die beiden Halbformen maximal geöffnet sind, eine Kurventrommel (11) mit einer ersten Kulisse (14), einem ersten Nocken (12) und Hebel (29) zur Übertragung der Öffnungs- und Schließbewegung der beiden Halbformen (1, 2), die durch die Bewegung des ersten Nockens (12) weitergeleitet werden, wobei der erste Nocken (12), der der ersten Kulisse (14) folgt, geeignet ist eine erste zyklische Öffnungs- und Schließbewegung der beiden Halbformen mit einem ersten maximalen Öffnungswinkel $\alpha$1 zu erzeugen, so dass die Entnahme eines Behälters mit einem ersten von der Form vorgegebenen Durchmesser ermöglicht wird,
    **dadurch gekennzeichnet, dass** die Kurventrommel (11) eine zweite Kulisse (13) aufweist, der der erste Nocken (12) alternativ zur ersten Kulisse (14) folgen kann, um eine zweite zyklische Öffnungs- und Schließbewegung der beiden Halbformen (1, 2) zu erzeugen, die einen zweiten maximalen Öffnungswinkel $\alpha$2 erreicht, der größer ist als der erste maximale Öffnungswinkel $\alpha$1, so dass die Entnahme eines Behälters mit größerem Durchmesser als der erste Durchmesser aus der Form ermöglicht wird.

2.  Form gemäß Anspruch 1, aufweisend ein für die beiden Halbformen komplementäres Formenunterteil (8), das eine zyklische Öffnungs- und Schließbewegung der beiden Halbformen synchron mit der Bewegung der beiden Halbformen ausführen kann.

3.  Form gemäß Anspruch 2, aufweisend eine Kurvenscheibe (15), die integral an der Kurventrommel (11) befestigt ist und eine dritte Kulisse (17) und eine vierte Kulisse (18) zur Bewegung des Formenunterteils (8) einschließt, sowie mit einem zweiten Nocken (16), der geeignet ist, der dritten und vierten Kulisse (17, 18) in zwei verschiedenen alternativen Bewegungen zu folgen.

4.  Form gemäß Anspruch 3, wobei die dritte Kulisse (17) durch die Bewegung des zweiten Nockens (16) eine erste Verlagerung des Formenunterteils (8) mit vorgegebener Länge erzeugt, und die vierte Kulisse (18) durch die Bewegung des zweiten Nockens (16) eine zweite Verlagerung des Formenunterteils (8) mit einer anderen Länge als der ersten Länge erzeugt.

5.  Form gemäß Anspruch 3 oder 4, wobei die Kurventrommel (11) und die Kurvenscheibe (15) zusammen um eine gemeinsame Achse, senkrecht zur Scharnierachse der beiden Halbformen (1, 2), oszillieren können.

6.  Form gemäß einem der vorigen Ansprüche, wobei die Halbformen (1, 2) jeweils einen Formenhalter (3, 4) und eine Halbschale (5, 6) oder einen Formenhalter (3, 4), einen Schalenträger (5', 6') und eine Halbschale (5, 6) aufweisen.

7.  Form gemäß einem der Ansprüche 3 bis 6, wobei ein dritter Nocken (33) vorgesehen ist, der geeignet ist, einer fünften Kulisse (32) in einem ersten Arbeitszyklus zu folgen, um eine zyklische Winkelbewegung an die Kurventrommel (11) und die Kurvenscheibe (15) mit der Auslenkung $\beta$1 weiterzuleiten.

8.  Form gemäß Anspruch 7, wobei der dritte Nocken (33) am Ende eines Hebels (31) befestigt ist, der in verschiedenen Winkellagen positioniert ist und geeignet ist, der fünften Kulisse (32) in einem zweiten Arbeitszyklus nach dem ersten Arbeitszyklus zu folgen, um eine zyklische Winkelbewegung an die Kurventrommel (11) und die Kurvenscheibe (16) mit dem Wert $\beta$2 weiterzuleiten.

9.  Form gemäß dem vorigen Anspruch, wobei die Kurventrommel (11) und die Kurvenscheibe (15) aus einem einzigen Stück (11') hergestellt werden können.

10. Rotationsblasmaschine, aufweisend eine Vielzahl von Formen mit den Merkmalen eines der vorigen Ansprüche.


**Revendications**

1.  Moule de soufflage (10) pour un récipient en matériau thermoplastique, comprenant deux demi-moules (1, 2) avec un dispositif d'ouverture et de fermeture cyclique qui rapproche et éloigne les deux demi-moules l'un de l'autre avec un angle d'ouverture qui va de 0 ° dans une position fermée des demi-moules (1, 2) à une valeur $\alpha$max dans une position d'ouverture maximale des demi-moules, une came à tambour (11) comprenant une première gorge de came (14), un premier galet de came (12) et des leviers (29) pour transmettre le mouvement d'ouverture et de fermeture des deux demi-moules (1, 2) communiqué par le déplacement du premier galet de came (12), dans lequel le premier galet de came (12) suivant la première gorge de came (14) est adapté pour produire un premier déplacement d'ouverture et de fermeture cyclique des deux demi-moules avec un premier angle d'ouverture maximal $\alpha 1$ de façon à permettre l'extraction d'un récipient d'un premier diamètre déterminé par le moule,

**caractérisé en ce que** la came à tambour (11) comprend une deuxième gorge de came (13) qui peut être suivie par le premier galet de came (12) en variante de la première gorge de came (14) pour produire un second déplacement d'ouverture et de fermeture cyclique des deux demi-moules (1, 2) qui atteint un second angle d'ouverture maximum $\alpha 2$ supérieur au premier angle d'ouverture maximal $\alpha 1$, de façon à permettre l'extraction du moule d'un récipient de diamètre supérieur au premier diamètre.

2. Moule selon la revendication 1, comprenant un fond de moule complémentaire (8) des deux demi-moules capable de réaliser un déplacement d'ouverture et de fermeture cyclique de façon synchrone avec le déplacement des deux demi-moules.

3. Moule selon la revendication 2, comprenant une came à disque (15) fixée d'un seul tenant à la came à tambour (11) incorporant une troisième gorge de came (17) et une quatrième gorge de came (18) pour mettre en mouvement le fond de moule (8) et un deuxième galet de came (16) adapté pour suivre les troisième et quatrième (17, 18) gorges de came dans deux variantes de déplacement différentes.

4. Moule selon la revendication 3, dans lequel la troisième gorge de came (17) par l'intermédiaire du déplacement du deuxième galet de came (16) produit un premier déplacement du fond de moule (8) d'une première longueur prédéterminée et dans lequel la quatrième gorge de came (18) par l'intermédiaire du déplacement du deuxième galet de came (16) produit un second déplacement du fond de moule (8) d'une longueur différente de la première longueur.

5. Moule selon la revendication 3 ou 4, dans lequel la came à tambour (11) et la came à disque (15) sont capables d'osciller ensemble autour d'un axe commun perpendiculaire à l'axe d'articulation des deux demi-moules (1, 2).

6. Moule selon l'une quelconque des revendications précédentes, dans lequel les demi-moules (1, 2) comprennent chacun un support de moule (3, 4) et une demi-coque (5, 6) ou un support de moule (3, 4), un support de coque (5', 6') et une demi-coque (5, 6).

7. Moule selon l'une quelconque des revendications 3 à 6, dans lequel un troisième galet de came (33) est prévu, adapté pour suivre une cinquième gorge de came (32) dans un premier cycle de fonctionnement pour communiquer un déplacement angulaire cyclique à la came à tambour (11) et à la came à disque (15) de grandeur $\beta 1$.

8. Moule selon la revendication 7, dans lequel le troisième galet de came (33) est fixé à l'extrémité d'un levier (31) positionné avec une orientation angulaire différente et est adapté pour suivre la cinquième gorge de came (32) dans un second cycle de fonctionnement en variante du premier cycle de fonctionnement pour communiquer un déplacement cyclique angulaire à la came à tambour (11) et à la came à disque (16) de valeur $\beta 2$.

9. Moule selon la revendication précédente, dans lequel la came à tambour (11) et la came à disque (15) peuvent être réalisées d'une seule pièce (11').

10. Machine rotative de moulage par soufflage comprenant une pluralité de moules avec les particularités de l'une quelconque des revendications précédentes.

Fig. 1

Fig. 2

Fig. 3

Fig. 4

Fig. 5

Fig. 6

10

Fig. 7

Fig. 8

Fig. 7a

Fig. 8a

Fig. 9a

11

K

13

14

Fig. 9b

β1 β2

λ1

λ2

13

14

Fig. 9c

EP 3 102 383 B1

Fig. 11

Fig. 10

Fig. 13

Fig. 12

Fig. 15

Fig. 14

Fig. 17

Fig. 16

a

b

Fig. 18

Fig. 19

Fig. 20

Fig. 21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2135726 B1

- US 7871259 B2